# EUROPEAN PATENT APPLICATION

(11) **EP 0 949 216 A1**
(43) Date of publication of application: **13.10.1999**
(21) Application number: 99850043.3
(22) Date of filing: 19.03.1999
(51) Int. Cl.: C03C 17/00

(54) **Process and apparatus for strength testing and coating of glass containers**

(30) Priority: 24.03.1998 SE 9800980
(71) Applicant: PLM AB, 201 80 Malmö (SE)
(72) Inventor: Augustsson, Bengt, 523 33 Ulricehamn (SE)
(74) Representative: Rostovanyi, Peter

(57) **Abstract**

In a process for producing coated glass containers (4'), an apparatus is used which includes a conveyor (3) for conveying hot glass containers (4) from a cooling unit (1) to a coating unit (2) having a dipping bath (6) for applying an overall coating to the outside surface of the glass containers in the coating unit (2). Further, the apparatus has means (6, 13) for strength testing by temporary cooling of each hot glass container, when being coated. The temporary cooling is enough to break singular weak glass containers not fulfilling predetermined strength requirements, and it generates tensile stresses on the outside surface of the glass containers which break the singular weak glass containers to be removed.

## Description

### Technical Field

The present invention relates to the production of glass containers, and more specifically to strength testing and coating of glass containers, such as bottles, jars and the like.

### Background Art

In this technical field, it is known to apply thin coatings to the outside surface of the glass containers for various purposes, for instance, in order to reduce the coefficient of friction between contacting glass surfaces. A common method is the so-called "hot and cold end treatment" which is well known to persons skilled in the art. According to this method, a vapour deposition of a metal oxide, such as tin oxide, is applied to the glass surface immediately after the forming of the glass containers. At the end of the annealing of the glass, an organic material is sprayed on the glass surface, such as a water-based polymer emulsion (such as polyethylene). The thin layer of this emulsion sprayed on the glass surface is referred to as a coating. Typically, the coating is very thin, normally less than 0.1 µm in thickness. The coating of this type serves to protect the outside surface of the glass container from further surface damage and corresponding strength reduction. A well recognised disadvantage of this spraying method is that it is difficult to obtain a uniform coating covering the whole exterior of the container. Especially, it may be hard to cover the bottom of the container.

A thicker polymer coating is sometimes also used for enhancing the mechanical strength of glass containers. It is well known that this mechanical strength is related to very small and often invisible defects and deficiencies on the outside surface of the glass container generated in the manufacturing process as well as by glass-to-glass contacts and glass contact with other hard objects present in the production line.

Polymer coatings with a thickness in the range of, for instance, 5-50 µm may provide a sufficient surface protection and often a strength enhancement as well. Thicker polymer coatings on the order of about 100 µm or more are also used in the glass industry for obtaining a protective and strength enhancing layer on light-weight refillable glass containers. Such thicker coatings also provide an improvement of the so-called fragment retention which is discussed in applicant's PCT publication WO 95/10487.

In the brochure "Det nya glaset" ("The New Glass"), published in February 1993 by the PLM Glass Division and referred to in the background art portion of the above WO document, there is described a method of applying a relatively thick polymer coating on the outside of glass containers by rolling the same in a bath containing liquid coating material. A disadvantage of such thick coatings discussed above is that they are often expensive and thereby add costs to the glass containers produced.

Hence, various types of surface treatment systems are known in the glass industry, and these systems can offer a reduced friction, a surface protection and in some cases a strength enhancing and a fragment retentive polymer coating. As discussed, these coating application systems have their specific drawbacks and they are often complicated in structure. For this reason, there is a need for a simplified coating system providing an inexpensive coating with improved properties.

In the present technical field, also the issue of strength testing glass containers is important and has to be addressed by persons skilled in the art. A batch of glass containers delivered from a common production line is likely to contain at least singular weak containers not fulfilling the strength requirements due to such surface deficiencies as discussed above. For securing good quality of each batch, the manufacturer basically has two options: either to conduct a strength test of some of the containers (sample testing) or to conduct a strength test of every single container (full testing). In general terms, the first method has the drawback of leaving the major part of the batch not inspected, thus creating a risk that the batch contains singular weak containers, and the second method suffers from the drawbacks of often being limited to certain types of defects and only partial testing of the container.

Strength testing of glass containers is normally done on a sampling basis. For instance, a few containers are taken from each batch and exposed to various types of testing, such as internal pressure testing, impact testing, vertical load testing or thermal shock testing. Known devices for such sample strength testing have been developed by, for instance, the US company American Glass Research, Inc. (nowadays AGR International, Inc). In particular, reference is made to their pamphlets entitled: "Ramp Pressure Tester", "Impact Tester", "Vertical Load Tester" and "Thermal Shock Machine".

In the sampling thermal shock method, the glass container is subjected to a temperature difference between the inside and outside surfaces generating tensile stresses on the outside surface of the glass container. If the container surface has such deficiencies as discussed by way of introduction, it is a "weak" container which will be broken by the tensile stresses.

In the internal pressure, impact and vertical load test methods, the glass containers are subjected to various mechanical stresses for basically the same test purposes.

Occasionally, in-line strength testing devices (full testing) have been used in the glass industry as well; though seldom applied in modern production.

A known device for in-line strength testing is the "squeeze tester" developed in the United States in the late sixties. In this device, a limited portion of each glass container side wall is given a tensile stress in a squeeze action by rolling the container between a rotating hard rubber wheel and a hard solid rubber plate. This known device is, however, basically only eliminating weak glass containers having defects on a limited portion of the inside surface.

Another known device for in-line testing is the "bottom impact tester" developed in Japan in the eighties. In this device, a steel rod is dropped through the mouth of the glass container and hits the inside bottom centre of the same. As a result, a limited tensile stress is generated on the inside heel region and the outside bottom surface of the container. Thus, basically only the bottom region of the container is tested.

As to background art, reference should also be made to the method known from EP-A-442 735 according to which glass containers are coated by in-line dipping of the same in a bath containing liquid coating material. Practical aspects on the method are discussed in an article "Wiegand-Glas - eine der führenden deutschen Glashütten setzt auf Innovation", published in the magazine Glastech. Ber. Glass Sci. Technol. 71, No. 2/1998 (pp 7-8). In this known method, however, coatings of about 5 µm in thickness are applied, and the issue of strength testing of the glass containers is not addressed.

A further dip-coating machine having a bath containing liquid plastic material is disclosed in US-A-3,270,710 which, however, does not involve any strength testing.

To sum up, there is a need for a new and improved technique for producing glass containers which have a uniform scuffing resistant and inexpensive coating and all of which fulfil predetermined strength requirements.

### Summary of the Invention

An object of the present invention is to provide a process and an apparatus for producing batches of coated glass containers, in which batches the number of singular containers not fulfilling predetermined strength requirements is reduced in relation to known techniques.

It is also an object of the invention to provide an improved technique of coating glass containers.

A particular object of the invention is to provide an improved process and apparatus for in-line strength testing and coating of glass containers.

A further object of the invention is that the improved process and apparatus should preferably be applicable to standard lines for production of glass containers.

Still another object of the invention is to provide a simplified and effective method of strength testing hot containers to be coated.

These objects are achieved by a process, an apparatus, a method and a use as defined in the appended independent claims. Preferred embodiments of the invention are set forth in the subclaims.

The invention brings out several advantages, some of which are mentioned below.
- Since every single glass container is strength tested, the risk that the batch contains singular weak containers is put at a minimum.
- The fact that the in-line strength testing is conducted at the same time as the coating operation simplifies the process and the apparatus significantly compared with prior-art techniques.
- All glass containers are fully and uniformly coated on their outside surface, thus enhancing the scuffing resistance of the coating compared to known spraying techniques.
- The same coating material as normally used for cold end spray coating application can be used in the strength testing and improved coating process.

In a preferred embodiment, the hot glass containers are dipped in a bath containing liquid coating material having a temperature lower than the glass containers. The temperatures of the containers and the cooling/coating liquid are carefully controlled, which makes it possible to control the strength testing operation.

In still another preferred embodiment, the temperature difference between the glass containers entering the coating unit and the cooling/coating liquid is controlled by adjustment of the length of a cooling path between the exit of the cooling unit and the coating unit, preferably by moving the coating unit in relation to the exit of the cooling unit. This also enhances the possibility of obtaining a careful control of the temperature difference between the containers and the cooling/ coating liquid.

Most preferably, the above-mentioned temperature difference is controlled in three ways: (1) by arranging fan means before the exit of the cooling unit, (2) by connecting a heat exchanger to the dipping bath and (3) by said adjustment of the length of the cooling path between the exit of the cooling unit and the coating unit.

### Brief Description of the Drawing

A presently preferred embodiment of the invention will now be described with reference to the accompanying schematic drawing, in which:
Fig. 1 is a side view of an apparatus according to the preferred embodiment, and
Fig. 2 is a graph of test results related to prior-art glass bottles and glass bottles produced in accordance with the invention.

### Detailed Description of a Preferred Embodiment

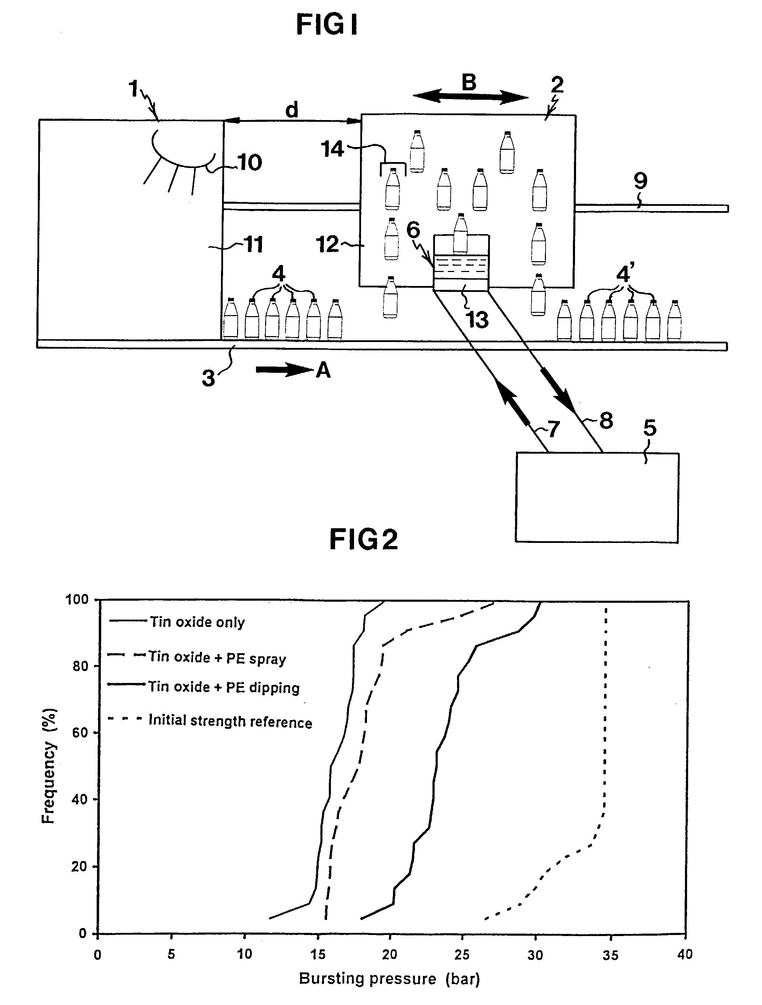

Fig. 1 schematically shows an apparatus for producing coated glass containers in accordance with a process following a preferred embodiment of the present invention. In particular but not exclusively, the invention is related to the production of light-weight, one-way bottles, jars and the like to be coated with a very thin protective polymer layer. The main components of the apparatus are: a cooling unit 1, here in the shape of a lehr, a coating unit 2 having coating means to be described in the following, and a conveyor 3 for conveying the bottles. The conveyor 3 conveys rows of bottles from the cooling unit 1 to the coating unit 2 in a direction shown by arrow A. For practical reasons, non-coated bottles, that is before the coating unit 2, are designated 4 whereas coated bottles, that is after the coating unit 2, are designated 4'.

Further, the apparatus comprises a heat exchanger 5 connected to a bath 6 containing liquid coating material, preferably a polymer emulsion in water. Most preferably, a polyethylene emulsion is used. Via conduits 7, 8, the heat exchanger 5 and the bath 6 are connected to each other to form a circulating circuit.

The coating unit 2 is movably mounted on rail means 9, thus movable in the directions of double arrow B in parallel with and above the conveyor 3.

The process is applied in the following manner.

Before the cooling unit 1, a primer layer of metal oxide is applied to the bottles 4. Preferably, this primer is tin oxide applied by vapour deposition to the bottles 4 providing them with a primer layer having a thickness of about 0.01-0.05 µm. This primer step is known per se, and it need not be described in detail. Hence, the primer equipment is not shown in Fig. 1.

The primer unit (not shown) and the cooling unit 1 are arranged in line after a conventional glass moulding unit (not shown). The glass containers entering the cooling unit 1 normally have an outside surface temperature of about 500-600°C.

In the cooling unit 1, the bottles 4 are cooled to a temperature suitable for the strength testing step, that is about 100-200°C at the exit of the cooling unit 1. For the understanding of the embodiment described and the invention, the bottles 4 leaving the cooling unit 1 and entering the coating unit 2 are still considered hot. The cooling unit 1 has fans 10 which are arranged before the exit 11 of the same. The fans 10 contribute to the cooling of the bottles 4 and belong to a temperature control system to be described below.

The bottles 4 are conveyed by the conveyor 3 to the strength testing and coating unit 2, in which they are lifted from the conveyor 3 and dipped into the bath 6 containing liquid coating material. After a few seconds, the coated bottles 4' are lifted from the bath 6 and put back on the conveyor 3. Thanks to the dipping of the bottles 4, these are provided with an overall coating on their entire outside surface. Preferably, the coating has a thickness in the range of 0.01-0.1 µm.

When the hot bottles 4 are being exposed to the coating liquid in the bath 6, they are at the same time subjected to a temporary cooling for strength testing that is enough to break singular weak bottles not fulfilling predetermined strength requirements. Since the liquid of the bath 6 has a temperature lower than the non-coated bottles 4, the temporary cooling in the bath 6 generates tensile stresses on the outside surface of the bottles 4, which stresses break singular weak bottles. Weak bottles that break are likely to have such deficiencies on their outside surface that were discussed in the introductory portion of this description.

In the coating operation, the specific temperature difference between the outside glass surface and the cooling/coating liquid of the bath 6 is within the range of 40-120°C. The specific temperature difference depends on the shape and the glass thickness of the bottle and is based on a finite element stress calculation for each type of bottle. The stress calculation sets the predetermined strength requirements discussed above.

The tank of the bath 6 has means 13 for overflow of liquid during dipping and for removal of glass fragments from broken bottles which sink to the bottom of the bath 6. Since the hot bottles 4 dipped into the cooling and coating liquid of the bath 6 tend to increase the temperature of the same, the bath 6 is connected to the heat exchanger 5 which contributes to the control of the temperature of the liquid. By adjustment of the heat exchanger 5, a suitable strength testing temperature can be upheld in the bath 6.

In addition to the temperature control obtained by the fans 10 in the cooling unit 1 and the heat exchanger 5, the temperature difference between the hot bottles 4 entering the coating unit 2 and the cooling/coating liquid in the bath 6 is controlled in a third way. Since the coating unit 2 is movable in relation to the exit 11 of the cooling unit 1, a cooling path, that is the distance (d) indicated in Fig. 1, can be adjusted. The distance (d) is between the exit 11 of the cooling unit 1 and the entrance 12 of the coating unit 2. By moving the coating unit 2 for example in a direction away from the exit 11 of the cooling unit 1, the cooling path (d) is increased, whereby the cooling time for the hot bottles 4 between the exit 11 of the cooling unit 1 and the entrance 12 of the coating unit 2 is increased and the bottle temperature is decreased. Vice versa applies when the cooling path (d) is shortened.

The interacting temperature control obtained by the fans 10, the heat exchanger 5 and the movement of the coating unit 2 for adjustment of the cooling path (d), provides for a temperature control system which secures the aimed-at strength testing of the bottles.

The means for temporary cooling and thereby strength testing of the hot bottles 4 comprise a gripping and lifting device 14 which is schematically shown in Fig. 1 and which may be of a type known per se. The device 13 may have gripping members (not shown) which are moved in a loop around the bath 6.

In this process, every single bottle is in-line strength tested for outside surface defects (full testing), and the risk that the batch to be delivered contains singular weak bottles is put at a minimum. Since the strength testing is conducted at the same time as the coating operation, the process and the apparatus are simplified compared with prior-art techniques. Further, all bottles are fully and uniformly coated on their outside surface, thus enhancing the overall scuffing resistance of the coated glass surface compared to known spraying techniques.

Some practical test results related to the invention are shown in Fig. 2. The tests were conducted on a 600 ml glass bottle treated with: (1) tin oxide only (primer), (2) tin oxide and polyethylene spray, and finally (3) tin oxide and dipping in a polyethylene emulsion, this third test following the invention. After a 0.5 h simulated filling line handling of empty and wet bottles, the bursting pressures shown in Fig. 2 were measured. An initial strength reference is shown as well.

This example indicates that bottles produced in accordance with the invention provide an improved scuffing resistance and stronger bottles compared with the normal tin oxide treated and polyethylene sprayed bottles after a filling line handling. In addition, the improved strength testing method by thermal shock simultaneously with the coating, can be carefully adjusted to remove singular weak bottles from the batch to be delivered.

Finally it should be mentioned that the invention is by no means restricted to the embodiments described in the foregoing, and modifications are feasible within the scope of the appended claims. For instance, the strength tested glass surface may be cooled and coated in a way other than described. One possibility would be by a liquid flow method, in which the bottles are exposed to a waterfall-like flow of a polymer emulsion for creating the specific cooling and coating of the outside surface of the bottles.

## Claims

1. A process of producing coated glass containers (4'), comprising the following steps in combination:
a) conveying hot glass containers (4) from the exit (11) of a cooling unit (1) to a coating unit (2);
b) applying an overall coating to the outside surface of the glass containers in the coating unit (2); and
c) subjecting each hot glass container, when being coated, to a temporary cooling for strength testing that is enough to break singular weak glass containers not fulfilling predetermined strength requirements, said temporary cooling generating tensile stresses on the outside surface of the glass containers, which stresses break said singular weak glass containers.

2. A process as claimed in claim 1, wherein said temporary cooling for strength testing is accomplished in the coating unit (2) by exposing the hot, non-coated glass containers (4) to a cooling liquid containing coating material and having a temperature lower than the glass containers, thereby providing said overall coating.

3. A process as claimed in claim 2, wherein the non-coated glass containers (4) are dipped in a bath (6) containing said cooling and coating liquid.

4. A process as claimed in claim 2 or 3, wherein the temperature difference between the glass containers (4) entering the coating unit (2) and said liquid is controlled by adjustment of the length (d) of a cooling path between the exit (11) of the cooling unit (1) and the coating unit (2), preferably by moving the coating unit (2) in relation to the exit (11) of the cooling unit (1).

5. A process as claimed in any one of claims 2-4, wherein the temperature difference between the glass containers (4) entering the coating unit (2) and said liquid is controlled by fan means (10) provided before the exit (11) of the cooling unit (1).

6. A process as claimed in any one of claims 2-5, wherein the temperature difference between the glass containers (4) entering the coating unit (2) and said liquid is controlled by a heat exchanger (5) which is connected to the coating unit (2)-and which controls the temperature of said liquid.

7. An apparatus for producing coated glass containers (4'), comprising:
a) a conveyor (3) for conveying hot glass containers (4) from a cooling unit (1) to a coating unit (2);
b) coating means (6) for applying an overall coating to the outside surface of the glass containers in the coating unit (2); and
c) means (6, 14) for temporary cooling and thereby strength testing of each hot glass container, when being coated, which temporary cooling is enough to break singular weak glass containers not fulfilling predetermined strength requirements, said temporary cooling generating tensile stresses on the outside surface of the glass containers, which stresses break singular weak glass containers.

8. An apparatus as claimed in claim 7, wherein said cooling and coating means being adapted to expose the non-coated glass containers (4) to a cooling liquid containing coating material and having a temperature lower than the glass containers, thereby providing said overall coating.

9. An apparatus as claimed in claim 8, wherein said cooling and coating means comprise a bath (6) containing said liquid in which the glass containers (4) are dipped.

10. An apparatus as claimed in claim 8 or 9, further comprising a cooling path between the exit (11) of the cooling unit (1) and the coating unit (2), the length (d) of said cooling path being adjustable for controlling the temperature difference between the glass containers (4) entering the coating unit (2) and said liquid.

11. An apparatus as claimed in claim 10, wherein the coating unit (2) is movably mounted for displacement along said cooling path.

12. An apparatus as claimed in any one of claims 8-11, wherein the cooling unit (1) before its exit (11) is provided with fan means (10) for controlling the temperature difference between the glass containers (4) entering the coating unit (2) and said liquid.

13. An apparatus as claimed in any one of claims 8-12, further comprising a heat exchanger (5) which is connected to the coating unit (2) for controlling the temperature of said liquid.

14. A method of strength testing hot glass containers (4), comprising the steps of:
a) providing an overall coating on the outside surface of the glass containers (4);
b) and, during said coating step, subjecting the glass containers to a temporary cooling that is enough to break singular weak glass containers not fulfilling predetermined strength requirements, said temporary cooling generating tensile stresses on the outside surface of the glass containers, which stresses break singular weak glass containers.

15. A method as claimed in claim 14, wherein the non-coated glass containers (4) are exposed to a cooling liquid containing a coating material and having a temperature lower than the glass containers, thereby providing said overall coating.

16. A method as claimed in claim 15, wherein said cooling and coating step is accomplished by dipping the glass containers (4) in a bath (6) containing said liquid.

17. A use of a coating liquid for strength testing of glass containers by exposing these to said coating liquid in a cooling step, in which tensile stresses are generated on the outside surface of the glass containers.
